# EUROPÄISCHE PATENTSCHRIFT

(11) **EP 3 387 204 B1**
(45) Veröffentlichungstag und Bekanntmachung des Hinweises auf die Patenterteilung: **26.02.2020**
(21) Anmeldenummer: 16791354.0
(22) Anmeldetag: 28.10.2016
(51) Int. Cl.: E05F 11/38

(54) **VORRICHTUNG, UMFASSEND EINE SCHEIBE UND MINDESTENS EINE HEBESCHIENE, VERFAHREN ZU IHRER HERSTELLUNG UND IHRE VERWENDUNG**
DEVICE, COMPRISING A GLASS PANE AND AT LEAST ONE LIFTING RAIL, METHOD FOR ITS PREPARATION AND ITS USE
DISPOSITIF, COMPRENANT UN DISQUE ET AU MOINS UN RAIL DE LEVAGE, SON PROCÉDÉ DE FABRICATION ET SON UTILISATION

(30) Priorität: 08.12.2015 EP 15198337
(43) Veröffentlichungstag der Anmeldung: 17.10.2018
(73) Patentinhaber: Saint-Gobain Glass France, 92400 Courbevoie (FR)
(72) Erfinder: KÖTTE, Rolf, 52477 Alsdorf (DE); KLEYER, Dieter, 52146 Würselen (DE); LASIOTA, Heinrich, 52223 Stolberg (DE); WITTIG, Elke, 52134 Herzogenrath (DE)
(74) Vertreter: Gebauer, Dieter Edmund
(86) Internationale Anmeldenummer: PCT/EP2016/076020
(87) Internationale Veröffentlichungsnummer: WO 2017/097495

(56) Entgegenhaltungen:
- EP-A1- 1 936 087
- EP-A1- 1 936 088

## Beschreibung

Die vorliegende Erfindung betrifft eine Vorrichtung, umfassend eine Scheibe und mindestens eine Hebeschiene.

Außerdem betrifft die vorliegende Erfindung ein Verfahren zur Herstellung der Vorrichtung.

Des Weiteren betrifft die vorliegende Erfindung die Verwendung der Vorrichtung.

Vorrichtungen, umfassend transparente Scheiben und Hebeschienen, sowie Verfahren zu ihrer Herstellung sind bekannt. Bei den Hebeschienen handelt es sich um flache Formteile, die im vertikalen Schnitt gesehen, gabelförmig sind. Der gabelförmige Teil mit seinen - im vertikalen Schnitt gesehen - Zinken bildet somit einen Bereich, der die Kanten der transparenten Scheiben beidseitig umgreifen kann. Die Kanten der transparenten Scheiben werden in das Innere dieses Bereichs eingeführt und am Boden des Bereichs sowie gegebenenfalls beidseitig flächig festgeklebt.

Bei diesem Vorgang kann es passieren, dass der unausgehärtete Klebstoff von der Kante der transparenten Scheibe aus den beiden unteren, noch offenen Bereichen des umgreifenden Bereichs der Hebeschiene herausgepresst wird, hängenbleibt und mit ausgehärtet wird.
Je nach Verwendung der Vorrichtung kann in der betreffenden funktionalen Konstruktion kein Platz für die herausgepresste Klebstoffmasse vorgesehen sein, so dass er in unerwünschter Weise andere Teile der Konstruktion berühren kann. Dies kann insbesondere der Fall sein, wenn die funktionale Konstruktion als bewegliche Seitenscheibe in Autotüren verwendet wird. Sie kann sich aber auch während der Gebrauchsdauer der Konstruktion ablösen und unerwünschte Geräusche hervorrufen. Des Weiteren kann sie insbesondere Öffnungen verstopfen, durch die in die Konstruktion eingedrungenes Wasser ablaufen kann. Wenn die Abläufe aber verstopft sind, kann dies im Laufe der Zeit zu Korrosionsschäden führen.

Ein weiterer Nachteil der Bildung von herausgepresster Klebstoffmasse ist der höhere Verbrauch an Klebstoff.

Um die vorstehend beschriebenen Nachteile nachträglich zu beheben, kann die herausgepresste Klebstoffmasse vor, während oder nach dem Aushärten des Klebstoffs mechanisch abgestreift werden. Dies kann mithilfe geeigneter Vorrichtungen oder manuell geschehen. Indes handelt man sich dadurch den weiteren Nachteil eines zusätzlichen Verfahrensschritts ein. Außerdem sind die abgestreiften Klebstoffreste nicht weiter verwendbarer Abfall, der entsorgt werden muss.

Aus der europäischen Patentanmeldung EP 1 936 088 A1 ist ein rahmenloses Fenster bekannt, das eine durchsichtige Scheibe umfasst, deren Unterkante in einem Schlitz von ein oder mehreren Halteklammern mit mindestens einer Schicht eines Klebemittels befestigt ist, wobei die Unterkante der Scheibe mit den Wänden des Schlitzes der Halteklammer mithilfe von ein oder mehr Schichten eines ersten Klebemittels, das nahe des lateralen Endes des Schlitzes appliziert wird, verbunden ist, wobei mindestens eine Schicht eines zweiten Klebemittels in den Schlitz zwischen die Schichten des ersten Klebemittels appliziert wird. Das Verfahren ist indes aufwändig und bietet keine vollständige Sicherheit gegen das Austreten von Klebemitteln.

Aus der europäischen Patentanmeldung EP 1 936 087 A1 ist eine rahmenloses Fenster bekannt, das eine durchsichtige Scheibe umfasst, deren Unterkante in einem Schlitz von ein oder mehreren Halteklammern mit mindestens einer Schicht eines Klebemittels befestigt ist, wobei das Klebemittel einen Elastizitätsmodul zwischen 10 und 90 MPa bei Raumtemperatur aufweist, und dass die Breite des Schlitzes zumindest einer Halteklammer zumindest doppelt so groß ist wie die Dicke der Scheibe. Es ist aber notwendig, dass zum Verhindern des Auslaufens des Klebemittels ein oder mehrere Verschlussteile zur Aufnahme der Unterkante der Scheibe in den Schlitz einer Halteklammer eingeführt werden müssen.

Demgegenüber besteht die Aufgabe der vorliegenden Erfindung, ein Verfahren zur Herstellung einer Vorrichtung, umfassend eine transparente Scheibe und mindestens eine hiermit haftfest verbundene Hebeschiene bereitzustellen, das in einfacher Weise Vorrichtungen liefert, die frei von herausgepresster Klebstoffmasse sind.

Diese und weitere Aufgaben werden nach dem Vorschlag der Erfindung durch die Vorrichtung und das Verfahren mit den Merkmalen der unabhängigen Patentansprüche gelöst. Vorteilhafter Ausgestaltungen der Erfindung sind durch die Merkmale der Unteransprüche gegeben.

Die Hebeschiene dient der Verbindung einer Scheibe mit einer Antriebsvorrichtung, beispielsweise eine Zugvorrichtung oder eine Hebevorrichtung, mit der die transparente Scheibe horizontal oder vertikal bewegt wird.

Bekanntermaßen handelt es sich bei der Hebeschiene um ein im Wesentlichen flaches Bauteil, das vorzugsweise aus einem technischen Kunststoff, insbesondere einem Thermoplasten wie Polyethylen, Polypropylen, Polystyrol, Polyoxymethylen, Polycarbonat, Polymethylmethacrylat, Polyamid, Polyester, insbesondere Polybutylenterphthalat (PBT), Polyvinylchlorid, Polysulfon, Polyethersulfon Polyetherketon und/oder Mischungen hiervon, aufgebaut ist.

Die Hebeschiene hat einen im Wesentlichen oder exakten quadratischen oder viereckigen Umriss, wobei der Bereich, der nicht die transparente Scheibe aufnimmt, auch beispielsweise einen konkav oder konvex abgerundeten oder trapezförmigen Umriss aufweisen kann.

Die Abmessungen der Hebeschiene können breit variieren und richten sich nach dem jeweiligen Verwendungszweck. Vorzugsweise hat die Hebeschiene eine Höhe von 3 bis 15 cm, eine Länge von 3 bis 20 cm und eine Dicke von 1 bis 5 cm, wobei bei einer Ausführungsform die Gesamtdicke in dem Bereich, der die Kante der transparenten Scheibe umfasst, größer ist als in dem Verbindungsbereich, der die Hebeschiene mit einer Antriebsvorrichtung verbindet, und in einer weiteren Ausführungsform gleich groß ist.

Der vertikale Schnitt durch die Hebeschiene, d.h. von der Außenkante des Verbindungsbereichs bis zur Außenkante des Bereichs, der die Kante der transparenten Scheibe umfasst, ist gabelförmig, beispielsweise stimmgabelförmig. Letzteres bedeutet, dass die Hebeschiene eine Stielfläche, einen Bereich einer Verzweigung, wo die Stielfläche in den gabelförmigen Bereich übergeht, der die Kante der transparenten Scheibe beidseitig umgreift, aufweist. Es kann aber auch eine Gabelform verwendet werden, bei der die Stielfläche übergangslos in den gabelförmigen Bereich übergeht, so dass die Stielfläche und die Außenfläche des Bereichs, der die Kante der transparenten Scheibe beidseitig umgreift, eine planare Fläche bilden.

Es ist von Vorteil, wenn die Kontur im Inneren dieses Bereichs im Bereich der Verzweigung der Kontur der Kante der Scheibe angepasst ist.

Die Stielfläche der Hebeschiene weist mindestens eine, insbesondere eine, Durchbohrung auf, die vorzugsweise mittig angeordnet ist. Die Durchbohrung kann unterschiedliche Umrisse aufweisen. So kann sie kreisförmig, viereckig, quadratisch, dreieckig oder sechseckig sein. Vorzugsweise ist sie kreisförmig.

Die Durchbohrung wird von einem Bolzen durchquert, der mit der Antriebsvorrichtung, vorzugsweise eine Hebevorrichtung oder eine Zugvorrichtung, verbunden ist.

In einer weiteren Ausführungsform weist die Stielfläche der Hebeschiene an ihrer Außenkante eine Aussparung auf, in die die Verbindung mit einer Antriebsvorrichtung, beispielsweise eine Hebevorrichtung, eingreift.

Erfindungsgemäß weist die Hebeschiene einen einseitig oder beidseitig, vorzugsweise einseitig, klebenden Klebestreifen auf, der die Stielfläche teilweise überdeckt, wobei die Durchbohrung oder die Aussparung frei bleibt. Wird ein beidseitig klebender Klebestreifen verwendet, wird die Schutzabdeckung an der Außenseite nach dem Aufbringen des Klebestreifens auf die Hebeschiene nicht entfernt.

Der Klebestreifen kann bei der stimmgabelförmigen Konfiguration zumindest teilweise, vorzugsweise vollständig, den Bereich der Verzweigung überdecken.

Erfindungsgemäß überdeckt der Klebestreifen den die Kante der transparenten Scheibe beidseitig umgreifenden Bereich und die einander gegenüberliegenden offenen Enden des Bereichs. Bei dieser Konfiguration wird der Klebestreifen beim Zusammenfügen von Scheibe und Hebeschiene an den beiden gegenüberliegenden Enden des umgreifenden Bereichs von der Kante der Scheibe verformt, insbesondere in der Richtung der Stielfläche.

In einer Ausführungsform der erfindungsgemäßen Vorrichtung umläuft der Klebestreifen die Stielfläche, den Verzweigungsbereich und den umgreifenden Bereich vollständig.

In einer weiteren Ausführungsform überdeckt der Klebestreifen den umgreifenden Bereich derart, dass die an die obere Kante der Hebeschiene angrenzenden Bereiche unbedeckt bleiben.

In einer anderen Ausführungsform der erfindungsgemäßen Vorrichtung ist der Klebestreifen transparent oder opak oder in mindestens einem Teilbereich transparent und in mindestens einem anderen Teilbereich opak.

Als erfindungsgemäß zu verwendende Klebestreifen können übliche und bekannte Klebestreifen wie zum Beispiel Tesa® Tape transparent 57405 (glänzend) oder Scotch Magic Tape® 810 (matt) verwendet werden. Ein geeignetes Kriterium zur Auswahl besonders gut geeigneter Klebestreifen ist das Bestehen des üblichen und bekannten Kataplasmaalterungstests (7 Tage bei 70 °C, 100 % relative Feuchte), bei dem keine Enthaftung des Klebestreifens von der Hebeschiene auftreten darf. Der Klebestreifen darf auch nicht einreissen und/oder nach unten in Richtung Stielfläche gleiten.

Vor dem Zusammenfügen der Scheibe und der Hebeschiene wird in das Innere des umgreifenden Bereichs ein Klebstoff eingebracht. Es können die unterschiedlichsten Klebstoffe verwendet werden. Vorzugsweise wird ein Polymerisationsklebstoff, ein Polykondensationsklebstoff oder ein Polyadditionsklebstoff verwendet. Bevorzugt wird ein Polyadditionsklebstoff, insbesondere ein Polyurethanklebstoff, verwendet.

Bei dem Einfügen der Scheibe verteilt sich der Klebstoff auf der Klebefläche, wobei der unerwünschte Austritt von Klebstoff durch den erfindungsgemäß zu verwendenden Klebestreifen wirksam verhindert wird.

Anschließend wird der Klebstoff ausgehärtet, und es entsteht eine haftfeste Verbindung zwischen der Scheibe und der Hebeschiene.

Die Scheibe der erfindungsgemäßen Vorrichtung kann aus Glas, Kunststoff, Holz, Metall oder Verbunden mindestens zweier dieser Werkstoffe aufgebaut sein.

Vorzugsweise handelt es sich bei der Scheibe um eine transparente Scheibe, die insbesondere aus Glas und/oder Kunststoff aufgebaut ist.

In einer bevorzugten Ausführungsform der erfindungsgemäßen Vorrichtung handelt es sich bei der transparenten Scheibe um eine Sicherheitsscheibe, die mindestens zwei transparente Scheiben aufweist.

Als erste und gegebenenfalls zweite Scheibe sind im Grunde alle Substrate geeignet, die unter den Bedingungen der Herstellung und der Verwendung der transparenten Scheibe thermisch und chemisch stabil sowie dimensionsstabil sind.

Die erste Scheibe und/oder die zweite Scheibe enthalten bevorzugt Glas, besonders bevorzugt Flachglas, Floatglas, Quarzglas, Borosilikatglas oder Kalk-Natron-Glas, oder klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und/oder Gemische davon. Die erste Scheibe und/oder die zweite Scheibe sind bevorzugt transparent, insbesondere für die Verwendung der Scheibe als bewegliche Seitenscheibe eines Fahrzeugs oder andere Verwendungen, bei denen eine hohe Lichttransmission erwünscht ist. Als transparent im Sinne der Erfindung wird dann eine Scheibe verstanden, die eine Transmission im sichtbaren Spektralbereich >70 % aufweist. Für Scheiben, die nicht im verkehrsrelevanten Sichtfeld des Fahrers liegen, beispielsweise für Dachscheiben, kann die Transmission aber auch viel geringer sein, beispielsweise >5 %.

Die Dicke der transparenten Scheibe kann breit variieren und so hervorragend den Erfordernissen des Einzelfalls angepasst werden. Vorzugsweise werden Scheiben mit den Standardstärken von 1,0 mm bis 25 mm, bevorzugt von 1,4 mm bis 5 mm für Fahrzeugglas und bevorzugt von 4 mm bis 25 mm für Möbel, Geräte und Gebäude, insbesondere für elektrische Heizkörper, verwendet. Die Größe der Scheibe kann breit variieren und richtet sich nach der Größe der erfindungsgemäßen Vorrichtung. Die erste Scheibe und gegebenenfalls die zweite Scheibe weisen beispielsweise im Fahrzeugbau und Architekturbereich übliche Flächen von 200 cm² bis zu 20 m² auf.

Die transparente Scheibe kann eine beliebige dreidimensionale Form aufweisen. Vorzugsweise hat die dreidimensionale Form keine Schattenzonen, so dass sie beispielsweise durch Kathodenzerstäubung beschichtet werden kann. Bevorzugt sind die Substrate planar oder leicht oder stark in einer Richtung oder in mehreren Richtungen des Raumes gebogen. Insbesondere werden planare Substrate verwendet. Die transparenten Scheiben können farblos oder gefärbt sein.

Mehrere Scheiben werden durch mindesten eine Zwischenschicht miteinander verbunden. Die Zwischenschicht enthält vorzugsweise mindestens einen thermoplastischen Kunststoff, bevorzugt Polyvinylbutyral (PVB), Ethylenvinylacetat (EVA) und/oder Polyethylenterephthalat (PET). Die thermoplastische Zwischenschicht kann aber auch beispielsweise Polyurethan (PU), Polypropylen (PP), Polyacrylat, Polyethylen (PE), Polycarbonat (PC), Polymethylmethacrylat, Polyvinylchlorid, Polyacetatharz, Gießharze, Polyacrylate, fluorierte Ethylen-Propylen-Copolymerisate, Polyvinylfluorid und/oder Ethylen-Tetrafluorethylen-Copolymerisate, Copolymere oder Gemische davon enthalten. Die thermoplastische Zwischenschicht kann durch eine oder auch durch mehrere übereinander angeordnete thermoplastische Folien ausgebildet werden, wobei die Dicke der thermoplastischen Folien bevorzugt von 0,25 mm bis 1 mm und typischerweise 0,38 mm oder 0,76 mm beträgt.

Die erfindungsgemäße Vorrichtung kann mithilfe unterschiedlicher Verfahren hergestellt werden. Bevorzugt wird sie aber mithilfe des erfindungsgemäßen Verfahrens hergestellt.

Das erfindungsgemäße Verfahren ist durch die folgenden Verfahrensschritte gekennzeichnet:
(1) Bereitstellen mindestens einer Hebeschiene, die
   - einen gabelförmigen vertikalen Schnitt und
   - eine Stielfläche mit einer Durchbohrung oder einer Aussparung an der Außenkante und
   aufweist,
(2) Einbringen eines Klebstoffs in das Innere des Bereichs im Bereich der Verzweigung in einer Menge, die nach dem Einfügen der Scheibe beidseitig höchstens bis zur oberen Kante des umgreifenden Bereichs reicht,
(3) Bekleben der mindestens einen Hebeschiene mit einem Klebestreifen, dergestalt dass er
   - die Stielfläche teilweise überdeckt, wobei die Durchbohrung frei bleibt, und
   - den die Kante der Scheibe beidseitig umgreifenden Bereich und die einander gegenüberliegenden offenen Enden des umgreifenden Bereichs derart überdeckt, dass der Klebestreifen von der Kante der einzufügenden Scheibe beim Einfügen in diesen Bereichen verformt wird,
(4) Einfügen der Kante der Scheibe in das Innere des beidseitig umgreifenden Bereichs wobei die beiden einander gegenüberliegenden Bereiche des Klebestreifens verformt werden, und
(5) Aushärten des Klebstoffs.

Mithilfe des erfindungsgemäßen Verfahrens kann die Bildung von herausgepressten Kunststoffmassen in einfacher Weise wirksam verhindert werden.

Das erfindungsgemäße Verfahren kann aber auch der Herstellung von Vorrichtungen des Standes der Technik dienen, indem man den Klebestreifen abzieht. Allerdings erfordert dies einen zusätzlichen Verfahrensschritt und es besteht die Gefahr, dass Teile von nicht ausgehärtetem oder ausgehärtetem Klebstoff mitgerissen werden.

Die erfindungsgemäße Vorrichtung, insbesondere die mithilfe des erfindungsgemäßen Verfahrens hergestellte erfindungsgemäße Vorrichtung, kann hervorragend als bewegliches funktionales und/oder dekoratives Einzelstück und/oder als Einbauteil in Möbeln, Geräten und Gebäuden sowie in Fortbewegungsmitteln zur Fortbewegung auf dem Lande, in der Luft, oder zu Wasser, insbesondere aber in Kraftfahrzeugen, beispielsweise als bewegliche Heckscheibe und Seitenscheibe und/oder bewegliches Glasdach verwendet werden. Vorzugsweise ist die erfindungsgemäße Vorrichtung als Fahrzeug-Seitenscheibe oder Glasdach ausgeführt.

Es versteht sich, dass die vorstehend genannten und nachstehend näher erläuterten Merkmale nicht nur in den angegebenen Kombinationen und Konfigurationen, sondern auch, im Rahmen der Patentansprüche, in anderen Kombinationen und Konfigurationen oder in Alleinstellung einsetzbar sind, ohne den Rahmen der vorliegenden Erfindung zu verlassen.

### Kurze Beschreibung der Figuren

Die Erfindung wird nun anhand von Ausführungsbeispielen näher erläutert, wobei Bezug auf die beigefügten Figuren genommen wird. Es zeigen in vereinfachter, in nicht maßstäblicher Darstellung:
- Figur 1: eine Seitenansicht einer Hebeschiene 1 mit zugeordneter Scheibe 5 vor dem Zusammenfügen zu einer Vorrichtung gemäß dem Stand der Technik;
- Figur 1a: einen vertikalen Schnitt durch die Anordnung gemäß der Figur 1;
- Figur 2: eine Seitenansicht der zusammengefügten Vorrichtung 1,5 gemäß des Standes der Technik mit herausgepresstem Klebstoff;
- Figur 2a: einen vertikalen Schnitt durch die zusammengefügte Vorrichtung 1,5 gemäß des Standes der Technik;
- Figur 3: eine Seitenansicht einer Hebeschiene 1 mit zugeordneter Scheibe 5 vor dem Zusammenfügen zu einer erfindungsgemäßen Vorrichtung 1,5;
- Figur 3a: Draufsicht auf die vertikale Kante der Hebeschiene 1 und auf die vertikale Kante der zugeordneten Scheibe 5;
- Figur 4: eine Seitenansicht der zusammengefügt erfindungsgemäßen Vorrichtung 1,5;
- Figur 4a: Draufsicht auf die vertikale Kante der Hebeschiene 1 und auf die vertikale Kante der zugeordneten Scheibe 5 der erfindungsgemäßen Vorrichtung 1,5;
- Figur 5: eine Seitenansicht der Hebeschiene 1 mit einer Aussparung 7;
- Figur 5a: einen vertikalen Schnitt durch die Hebeschiene 1 längs der Schnittlinie A-B;
- Figur 6: eine Seitenansicht der Hebeschiene 1;
- Figur 6a: einen vertikalen Schnitt durch die Hebeschiene 1.

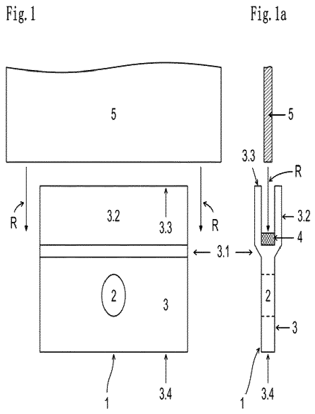

In den Figuren 1 bis 4a haben die Bezugszeichen die folgende Bedeutung:
- 1: Hebeschiene mit gabelförmigem vertikalem Schnitt

- 2: Durchbohrung der Hebeschiene 1 durch die Stielfläche 3

- 3: Stielfläche der Hebeschiene 1
- 3.1: Bereich der Verzweigung
- 3.2: die Kante der Scheibe 5 umgreifender Bereich
- 3.3: Oberkante
- 3.4: Außenkante

- 4: Klebstoff
- 4.1: herausgepresste Klebstoffmasse
- 5: Scheibe

- 6: den Bereich der Verzweigung 3.1 umlaufender Klebestreifen
- 6.1: durch die Scheibe 5 verformter Bereich des Klebestreifens 6

- 7: Aussparung an der Außenkante 3.4

- R: Richtung des Einfügens
- R1: Richtung der Verformung
- A-B: Schnittlinie

### Ausführliche Beschreibung der Figuren

### Figuren 1 und 1a

Die Figur 1 zeigt die Seitenansicht eines Ausschnitts aus einer transparenten Scheibe 5 und eine Hebeschiene 1 vor dem Zusammenfügen in Richtung R zu der Vorrichtung 1,5 des Standes der Technik.

Bei der transparenten Scheibe 5 handelt es sich hier und im Folgenden um eine Verbundsicherheitsglasscheibe (VSG).

Bei der Hebeschiene 1 handelt es sich hier und im Folgenden um ein Bauteil aus Polypropylen der Länge von 8 cm, der Höhe von 6 cm, der Dicke von 1 cm im Stielbereich 3 und der Gesamtdicke von 1,5 cm in dem die Kante der transparenten Scheibe umfassenden Bereich 3.2 (vgl. Figur 1a). Die Hebeschiene 1 weist des Weiteren einen Bereich der Verzweigung 3.1 auf, wo der Bereich 3 in den Bereich 3.2 übergeht.

In dem Stielbereich 3 ist mittig eine kreisförmige Durchbohrung eines Durchmessers von 1,5 cm angeordnet, die der Aufnahme eines Bolzens zur Verbindung mit einer Antriebsvorrichtung, beispielsweise einer Hebevorrichtung, dient.

Die Figur 1a zeigt den vertikalen Schnitt durch die Hebeschiene 1 und verdeutlicht so deren stimmgabelförmige Konfiguration.

In das Innere des Bereichs 3.2 wird ein Polyurethan-Klebstoff 4 eingefüllt. Damit sind die Hebeschiene 1 und die transparente Scheibe 5 bereit zum Zusammenfügen.

### Figuren 2 und 2a

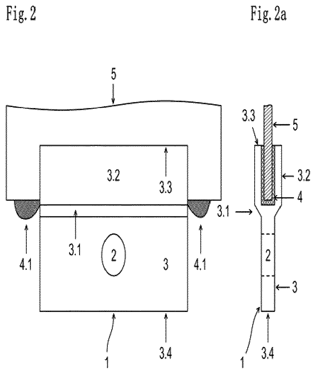

Die Figur 2 zeigt die Seitenansicht einer zusammengefügten Vorrichtung 1,5 des Standes der Technik aus transparenter Scheibe 5 und Hebeschiene 1.

Die Figur 2a zeigt den vertikalen Schnitt durch die Vorrichtung 1,5 des Standes der Technik.

Durch das Einfügen der transparenten Scheibe 5 in das Innere des umgreifenden Bereichs 3.2 wird der unausgehärtete Klebstoff 4 verdrängt und auf der Klebefläche verteilt. Allerdings wird hierbei der unausgehärtete Klebstoff 4 auch seitlich aus dem Bereich 3.2 herausgequetscht und bildet so die unerwünschten herausgepressten Klebstoffmassen 4.1.

### Figuren 3 und 3a

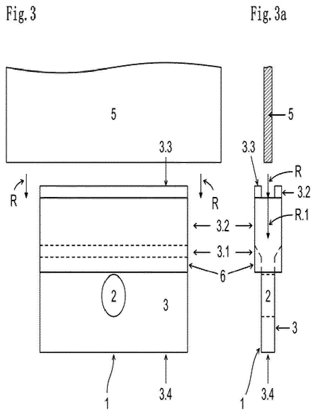

Die Figur 3 zeigt die Seitenansicht der transparenten Scheibe 5 und der Hebeschiene 1 vor dem Zusammenfügen in Richtung R, R1 zu der erfindungsgemäßen Vorrichtung 1,5.

Die Figur 3a zeigt die Draufsicht auf die seitliche vertikale Endkante der erfindungsgemäß zu verwendenden Hebeschiene 1.

Die erfindungsgemäß zu verwendende Hebeschiene 1 ist mit einem Klebestreifen 6 (Tesa® Tape transparent 57405 (glänzend)) umlaufend beklebt. Dabei ist der Stielbereich 3 so abgedeckt, dass die Durchbohrung 2 frei bleibt. Der Bereich der Verzweigung 3.1 ist vollständig überklebt, wogegen der umgreifende Bereich 3.2 nur bis kurz unterhalb der Oberkante 3.3 bedeckt ist.

Die Figur 3a zeigt, wie der Klebestreifen 6 die Öffnung in der seitlichen vertikalen Endkante überbrückt.

Im Inneren des umgreifenden Bereichs 3.2 befindet sich der Klebstoff 4 (nicht sichtbar).

Damit sind die transparente Scheibe und die Hebeschiene 1 mit dem Klebestreifen 6 bereit zum Zusammenfügen.

### Figuren 4 und 4a

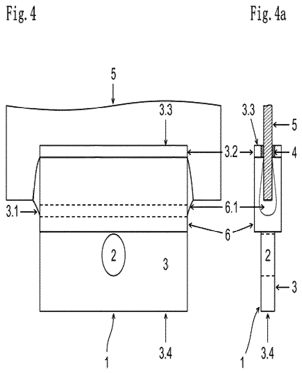

Die Figur 4 zeigt die Seitenansicht der zusammengefügten erfindungsgemäßen Vorrichtung 1,5 mit den beiden durch die Kante der transparenten Scheibe 5 verformten Bereichen 6.1 des Klebestreifens 6. Diese Konfiguration wird noch einmal anhand der Figur 4a, die eine Sicht auf die seitlichen vertikalen Endkanten der erfindungsgemäßen Vorrichtung 1,5 bietet, verdeutlicht.

### Figuren 5 und 5a

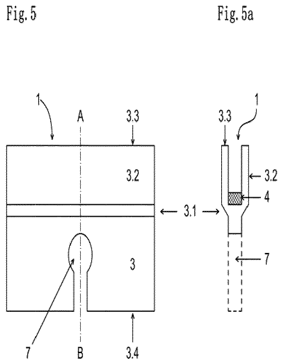

Die Figur 5 zeigt die Seitenansicht einer Hebeschiene 1, wie sie im erfindungsgemäßen Verfahren zur Herstellung der erfindungsgemäßen Vorrichtung 1,5 verwendet werden kann. Die Figur 5 a zeigt den vertikalen Schnitt durch die Hebeschiene 1 gemäß der Figur 5 längs der Schnittlinie A-B.

Die Hebeschiene 1 der Figur 5 entspricht in ihren Merkmalen der Hebeschiene 1 gemäß der Figur 1, mit dem wesentlichen Unterschied, dass anstelle der Durchbohrung 2 in der Stielfläche 3 die Außenkante 3.4 die Aussparung 7 aufweist. In diese Aussparung 7 kann die Verbindung mit einer Antriebsvorrichtung, beispielsweise eine Hebevorrichtung, eingreifen.

### Figuren 6 und 6a

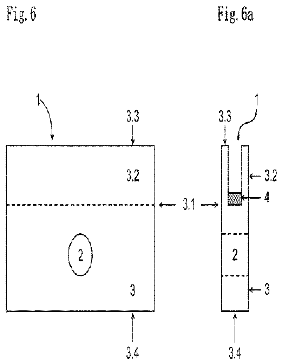

Die Figur 6 zeigt die Seitenansicht einer Hebeschiene 1, wie sie im erfindungsgemäßen Verfahren zur Herstellung der erfindungsgemäßen Vorrichtung 1,5 verwendet werden kann. Die Figur 6 a zeigt den vertikalen Schnitt durch die Hebeschiene 1 gemäß der Figur 6.

Die Hebeschiene 1 der Figur 6 entspricht in ihren Merkmalen der Hebeschiene 1 gemäß der Figur 1, mit dem wesentlichen Unterschied, dass ihre Stielfläche 3 und der umgreifende Bereich 3.2 eine planare Fläche bilden.

## Patentansprüche

1. Vorrichtung (1,5), umfassend mindestens eine Hebeschiene (1), die haftfest mit einer Scheibe (5) der Vorrichtung (1,5) verbunden ist, wobei die mindestens eine Hebeschiene (1) einen gabelförmigen, insbesondere stimmgabelförmigen vertikalen Schnitt, mit einem die Kante der transparenten Scheibe (5) beidseitig umgreifenden Bereichs (3.2), einer Stielfläche (3) und einem Bereich der Verzweigung (3.1), wo die Stielfläche (3) in den umgreifenden Bereich (3.2) übergeht,
aufweist, wobei die Scheibe (5) im umgreifenden Bereich (3.2) beidseitig mithilfe eines Klebstoffs (4) fixiert ist, **dadurch gekennzeichnet, dass** an der Außenkante (3.4) der Stielfläche (3) eine Durchbohrung (2) oder eine Aussparung (7) angeordnet ist, wobei die mindestens eine Hebeschiene (1) einen Klebestreifen (6) mit zwei einander gegenüberliegenden verformten Bereichen (6.1) aufweist, wobei der Klebestreifen (6)
- die Stielfläche (3) teilweise überdeckt, wobei die Durchbohrung (2) oder die Aussparung (7) frei bleibt,
- den die Kante der Scheibe (5) beidseitig umgreifenden Bereich (3.2) und die einander gegenüberliegenden offenen Enden des Bereichs (3.2) derart überdeckt, dass der Klebestreifen (6) von der Kante der eingefügten Scheibe (5) in den beiden einander gegenüberliegenden Bereichen (6.1) des Klebestreifens (6) verformt ist.

2. Vorrichtung (1,5) nach Anspruch 1, **dadurch gekennzeichnet, dass** der Klebestreifen (6) die Stielfläche (3) und die Bereiche (3.1) und (3.2) vollständig umläuft.

3. Vorrichtung (1,5) nach Anspruch 1 oder 2, **dadurch gekennzeichnet, dass** der Klebestreifen (6) den Bereich (3.2) derart überdeckt, dass die an die oberen Kanten der mindestens einen Hebeschiene (1) angrenzenden Bereiche unbedeckt bleiben.

4. Vorrichtung (1,5) nach einem der Ansprüche 1 bis 3, **dadurch gekennzeichnet, dass** der Klebestreifen (6) transparent oder opak ist oder in mindestens einem Teilbereich transparent und in mindestens einem anderen Teilbereich opak ist.

5. Vorrichtung (1,5) nach einem der Ansprüche 1 bis 4, **dadurch gekennzeichnet, dass** der Klebstoff (4) die Scheibe (5) beidseitig bis zur oberen Kante der mindestens einen Hebeschiene (1) bedeckt.

6. Vorrichtung (1,5) nach einem der Ansprüche 1 bis 5, **dadurch gekennzeichnet, dass** der Klebstoff (4) ein Polymerisationsklebstoff, ein Polykondensationsklebstoff oder ein Polyadditionsklebstoff ist.

7. Vorrichtung (1,5) nach einem der Ansprüche 1 bis 6, **dadurch gekennzeichnet, dass** der Boden im Inneren des Bereichs (3.2) im Bereich der Verzweigung (3.1) der Kontur der Kante der Scheibe (5) angepasst ist.

8. Vorrichtung (1,5) nach einem der Ansprüche 1 bis 7, **dadurch gekennzeichnet, dass** die Vorrichtung (1,5) über die mindestens eine Hebeschiene (1) mit einer Antriebsvorrichtung verbunden ist.

9. Vorrichtung (1,5) nach Anspruch 8, **dadurch gekennzeichnet, dass** die Antriebsvorrichtung mithilfe eines die Durchbohrung (2) durchquerenden Bolzens oder einer in die Aussparung (7) eingreifenden Vorrichtung mit der mindestens einen Hebeschiene (1) verbunden ist.

10. Vorrichtung (1,5) nach einem der Ansprüche 8 bis 9, **dadurch gekennzeichnet, dass** die Antriebsvorrichtung eine Hebevorrichtung oder eine Zugvorrichtung ist.

11. Verfahren zur Herstellung einer Vorrichtung (1,5) gemäß einem der Ansprüche 1 bis 10, **gekennzeichnet durch** die folgenden Verfahrensschritte:
(1) Bereitstellen mindestens einer Hebeschiene (1), die
- einen gabelförmigen vertikalen Schnitt,
- eine Stielfläche (3) mit einer Durchbohrung (2) oder einer Aussparung (7) an der Außenkante (3.4),
- einen Bereich der Verzweigung (3.1), wo die Stielfläche (3) in den Bereich (3.2) übergeht, und
- einen Bereich (3.2), der in der fertigen Vorrichtung (1,5) die Kante einer Scheibe beidseitig umgreift,
aufweist,
(2) Einbringen eines Klebstoffs (4) in das Innere des Bereichs (3.2) im Bereich der Verzweigung (3.1) in einer Menge, die nach dem Einfügen der Scheibe (5) beidseitig höchstens bis zur oberen Kante des Bereichs (3.2) reicht,
(3) Bekleben der mindestens einen Hebeschiene (1) mit einem Klebestreifen (6), dergestalt dass er
- die Stielfläche (3) teilweise überdeckt, wobei die Durchbohrung (2) oder die Aussparung (7) frei bleibt, und
- den die Kante der Scheibe (5) beidseitig umgreifenden Bereich (3.2) und die einander gegenüberliegenden offenen Enden des Bereichs (3.2) derart überdeckt, dass der Klebestreifen (6) von der Kante der einzufügenden Scheibe (5) beim Einfügen die beiden einander gegenüberliegenden Bereiche (6.1) des Klebestreifens (6) in der Richtung (R1) verformt wird,
(4) Einfügen der Kante der Scheibe (5) in das Innere des beidseitig umgreifenden Bereichs (3.2) wobei die beiden einander gegenüberliegenden Bereiche (6.1) des Klebestreifens (6) in der Richtung (R1) verformt werden, und
(5) Aushärten des Klebstoffs (4).

12. Verfahren zur Vermeidung von herausgepressten Klebstoffmassen (4.1) bei der Herstellung von Vorrichtungen (1,5) aus mindestens einer Hebeschiene (1) und einer Scheibe (5) gemäß dem Verfahren 11, **gekennzeichnet durch** die folgenden Verfahrensschritte:
(1) Bereitstellen mindestens einer Hebeschiene (1), die
- einen gabelförmigen vertikalen Schnitt,
- eine Stielfläche (3) mit einer Durchbohrung (2) oder einer Aussparung (7) an der Außenkante (3.4),
- einen Bereich der Verzweigung (3.1), wo die Stielfläche (3) in den Bereich (3.2) übergeht, und
- einen Bereich (3.2), der in der fertigen Vorrichtung (1,5) die Kante einer Scheibe beidseitig umgreift,
aufweist,
(2) Einbringen eines Klebstoffs 4 in das Innere des Bereichs (3.2) im Bereich der Verzweigung (3.1) in einer Menge, die nach dem Einfügen der transparenten Scheibe (5) beidseitig höchstens bis zur oberen Kante des Bereichs (3.2) reicht,
(3) Bekleben der mindestens einen Hebeschiene (1) mit einem Klebestreifen (6), dergestalt dass er
- die Stielfläche (3) teilweise überdeckt, wobei die Durchbohrung (2) oder die Aussparung (7) frei bleibt, und
- den die Kante der transparenten Scheibe (5) beidseitig umgreifenden Bereich (3.2) und die einander gegenüberliegenden offenen Enden des Bereichs (3.2) derart überdeckt, dass der Klebestreifen (6) von der Kante der einzufügenden Scheibe (5) beim Einfügen die beiden einander gegenüberliegenden Bereiche (6.1) des Klebestreifens (6) in der Richtung (R1) verformt wird,
(4) Einfügen der Kante der Scheibe (5) in das Innere des beidseitig umgreifenden Bereichs (3.2) wobei die beiden einander gegenüberliegenden Bereiche (6.1) des Klebestreifens (6) in der Richtung (R1) verformt werden,
(5) Abziehen des Klebestreifens (6) unter Mitnahme überschüssigen, seitlich aus dem beidseitig umgreifenden Bereich (3.2) ausgetretenen Klebstoffs und
(6) Aushärten des verbleibenden Klebstoffs (4).

13. Verwendung der Vorrichtung (1,5) gemäß einem der Ansprüche 1 bis 10 oder der mithilfe des Verfahrens gemäß Anspruch (11) oder gemäß Anspruch (12) hergestellten Vorrichtung (1,5) als bewegliches funktionales und/oder dekoratives Einzelstück und als Einbauteil in Möbeln, Geräten, Gebäuden und Fortbewegungsmitteln.

14. Verwendung nach Anspruch 13, **dadurch gekennzeichnet, dass** es sich bei den Fortbewegungsmitteln um Flugzeuge, Schiffe, Züge und Kraftfahrzeuge handelt.

15. Verwendung nach Anspruch 14, **dadurch gekennzeichnet, dass** die Vorrichtungen (1,5) als bewegliche transparente Seitenscheiben und Glasdächer von Kraftfahrzeugen verwendet werden.

## Claims

1. Device (1,5), comprising at least one lifting rail (1), which is firmly adhesively bonded to a pane (5) of the device (1,5), wherein the at least one lifting rail (1) has a fork-shaped, in particular a tuning-fork-shaped, vertical section, with a region (3.2) bilaterally enclosing the edge of the transparent pane (5), a stem surface (3), and a region of bifurcation (3.1), where the stem surface (3) transitions into the enclosing region (3.2),
wherein the pane (5) is bilaterally fixed in the enclosing region (3.2) by means of an adhesive (4), **characterized in that**
a through-hole (2) or a cutout (7) is arranged on the outer edge (3.4) of the stem surface (3), wherein the at least one lifting rail (1) has an adhesive strip (6) with two mutually opposite deformed regions (6.1), wherein the adhesive strip (6)
- partially covers the stem surface (3), wherein the through-hole (2) or the cutout (7) remains exposed,
- covers the region (3.2) bilaterally enclosing the edge of the pane (5) and the mutually opposite open ends of the region (3.2) such that the adhesive strip (6) is deformed by the edge of the inserted pane (5) in the two mutually opposite regions (6.1) of the adhesive strip (6).

2. Device (1,5) according to claim 1, **characterized in that** the adhesive strip (6) completely encircles the stem surface (3) and the regions (3.1) and (3.2).

3. Device (1,5) according to claim 1 or 2, **characterized in that** the adhesive strip (6) covers the region (3.2) such that the regions adjacent the upper edges of the at least one lifting rail (1) remain uncovered.

4. Device (1,5) according to one of claims 1 through 3, **characterized in that** the adhesive strip (6) is transparent or opaque or is transparent in at least one subregion and is opaque in at least one other subregion.

5. Device (1,5) according to one of claims 1 through 4, **characterized in that** the adhesive (4) covers the pane (5) on both sides up to the upper edge of the at least one lifting rail (1).

6. Device (1,5) according to one of claims 1 through 5, **characterized in that** the adhesive (4) is a polymerization adhesive, a polycondensation adhesive, or a polyaddition adhesive.

7. Device (1,5) according to one of claims 1 through 6, **characterized in that** the bottom in the interior of the region (3.2) in the region of bifurcation (3.1) is adapted to the contour of the edge of the pane (5).

8. Device (1,5) according to one of claims 1 through 7, **characterized in that** the device (1,5) is connected to a drive device via the at least one lifting rail (1).

9. Device (1,5) according to claim 8, **characterized in that** the drive device is connected to the at least one lifting rail (1) by means of a bolt passing through the through-hole (2) or a device engaging in the cutout (7).

10. Device (1,5) according to one of claims 8 through 9, **characterized in that** the drive device is a lifting device or a traction device.

11. Method for producing a device (1,5) according to one of claims 1 through 10, **characterized by** the following process steps:
(1) Providing at least one lifting rail (1), having
- a fork-shaped vertical section,
- a stem surface (3) with a through-hole (2) or a cutout (7) on the outer edge (3.4),
- a region of bifurcation (3.1), where the stem surface (3) transitions into the region (3.2), and
- a region (3.2), which, in the finished device (1,5), bilaterally encloses the edge of a pane,
(2) Introducing an adhesive (4) into the interior of the region (3.2) in the region of bifurcation (3.1) in an amount that reaches, after insertion of the pane (5), on both sides at most up to the upper edge of the region (3.2),
(3) Adhesively mounting an adhesive strip (6) on the at least one lifting rail (1) such that it
- partially covers the stem surface (3), wherein the through-hole (2) or the cutout (7) remains exposed, and
- covers the region (3.2) bilaterally enclosing the edge of the pane (5) and the mutually opposite open ends of the region (3.2) such that the adhesive strip (6) is deformed by the edge of the insertion pane (5) upon insertion the two mutually opposite regions (6.1) of the adhesive strip (6) in the direction (R1),
(4) Inserting the edge of the pane (5) into the interior of the bilaterally enclosing region (3.2), wherein the two mutually opposite regions (6.1) of the adhesive strip (6) are deformed in the direction (R1), and
(5) Curing the adhesive (4).

12. Method for avoiding pressed-out adhesive masses (4.1) during production of devices (1,5) comprising at least one lifting rail (1) and one pane (5) according to the method 11, **characterized by** the following process steps:
(1) Providing at least one lifting rail (1), having
- a fork-shaped vertical section,
- a stem surface (3) with a through-hole (2) or a cutout (7) on the outer edge (3.4),
- a region of bifurcation (3.1), where the stem surface (3) transitions into the region (3.2), and
- a region (3.2), which bilaterally encloses, in the finished device (1,5), the edge of a pane,
(2) Introducing an adhesive (4) into the interior of the region (3.2) in the region of bifurcation (3.1) in an amount, that reaches, after insertion of the transparent pane (5), at most up to the upper edge of the region (3.2),
(3) Adhesively mounting an adhesive strip (6) on the at least one lifting rail (1) such that it
- partially covers the stem surface (3), wherein the through-hole (2) or the cutout (7) remains exposed, and
- covers the region (3.2) bilaterally enclosing the edge of the transparent pane (5) and the mutually opposite open ends of the region (3.2) such that the adhesive strip (6) is deformed by the edge of the insertion pane (5) upon insertion the two mutually opposite regions (6.1) of the adhesive strip (6) in the direction (R1),
(4) Inserting the edge of the pane (5) into the interior of the bilaterally enclosing region (3.2) wherein the two mutually opposite regions (6.1) of the adhesive strip (6) are deformed in the direction (R1),
(5) Peeling off the adhesive strip (6) along with excess adhesive that flowed out laterally from the bilaterally enclosing region (3.2), and
(6) Curing the remaining adhesive (4).

13. Use of the device (1,5) according to one of claims 1 through 10 or the device (1, 5) produced according to claim (11) or according to claim (12) as a movable functional and/or decorative individual piece and as a built-in component in furniture, appliances, buildings, and means of transportation.

14. Use according to claim 13, **characterized in that** the means of transportation are aircraft, watercraft, trains, and motor vehicles.

15. Use according to claim 14, **characterized in that** the devices (1,5) are used as movable transparent side window panes and glass roofs of motor vehicles.

## Revendications

1. Dispositif (1, 5) comprenant au moins un rail de levage (1) qui est relié de manière adhésive à une vitre (5) du dispositif (1, 5), où ledit au moins un rail de levage (1) présente une section verticale en forme de fourche, en particulier en forme de diapason, avec une zone (3.2) qui entoure le bord de la vitre transparente (5) des deux côtés, la surface d'une tige (3) et une zone de bifurcation (3.1) où la tige (3) se prolonge dans la zone (3.2) d'encerclement, où la vitre (5) est fixée des deux côtés dans la zone d'encerclement (3.2) au moyen d'un adhésif (4), **caractérisée en ce qu'**une perforation (2) ou un évidement (7) est disposé sur le bord extérieur (3.4) de la surface de la tige (3), où ledit au moins un rail de levage (1) présente une bande adhésive (6) avec deux zones déformées (6.1) l'une en face de l'autre,
où la bande adhésive (6)
- recouvre partiellement la surface de la tige (3), où la perforation (2) ou l'évidement (7) restent libre,
- recouvre la zone (3.2) qui entoure le bord de la vitre (5) des deux côtés et les extrémités ouvertes opposées de ladite zone (3.2) de telle manière que la bande adhésive (6) est déformée par le bord de la vitre insérée (5) dans les deux zones (6.1) de la bande adhésive (6), l'une en face de l'autre.

2. Dispositif (1, 5) selon la revendication 1 ou 2, **caractérisé en ce que** la bande adhésive (6) entoure complètement la surface de la tige (3) et des zones (3.1) et (3.2).

3. Dispositif (1, 5) selon la revendication 1 ou 2, **caractérisé en ce que** la bande adhésive (6) recouvre la zone (3.2) de telle manière que les zones adjacentes aux bords supérieurs dudit au moins un rail de levage (1) restent découvertes.

4. Dispositif (1, 5) selon l'une des revendications 1 à 3, **caractérisé en ce que** la bande adhésive (6) est transparente ou opaque ou est transparente dans au moins une région partielle et opaque dans au moins une autre région partielle.

5. Dispositif (1, 5) selon l'une des revendications 1 à 4, **caractérisé en ce que** la colle (4) recouvre la vitre (5) des deux côtés jusqu'au bord supérieur dudit au moins un rail de levage (1).

6. Dispositif (1, 5) selon l'une des revendications 1 à 5, **caractérisé en ce que** l'adhésif (4) est un adhésif de polymérisation, un adhésif de polycondensation ou un adhésif de polyaddition.

7. Dispositif (1, 5) selon l'une des revendications 1 à 6, **caractérisé en ce que** le fond à l'intérieur de la zone (3.2) dans la zone de bifurcation (3.1) est adapté au contour du bord de la vitre (5).

8. Dispositif (1, 5) selon l'une des revendications 1 à 7, **caractérisé en ce que** le dispositif (1, 5) est relié à un dispositif d'entraînement par l'intermédiaire dudit au moins un rail de levage (1).

9. Dispositif (1, 5) selon la revendication 8, **caractérisé en ce que** le dispositif d'entraînement est relié audit moins un rail de levage (1) au moyen d'un boulon traversant la perforation (2) ou d'un dispositif s'engageant dans l'évidement (7).

10. Dispositif (1, 5) selon l'une des revendications 8 à 9, **caractérisé en ce que** le dispositif d'entraînement est un dispositif de levage ou un dispositif de traction.

11. Procédé de fabrication d'un dispositif (1, 5) selon l'une des revendications 1 à 10, **caractérisé par** les étapes de procédé suivantes :
(1) fourniture d'au moins un rail de levage (1) qui présente
- une coupe verticale en forme de fourche,
- la surface d'une tige (3) avec une perforation (2) ou un évidement (7) sur le bord extérieur (3.4),
- une zone de bifurcation (3.1) où la surface de la tige (3) se prolonge dans la zone (3.2), et
- une zone (3.2) qui entoure le bord d'une vitre des deux côtés dans le dispositif fini (1, 5),
(2) introduction d'une quantité d'un adhésif (4) à l'intérieur de la zone (3.2) dans la zone de bifurcation (3.1) qui, après l'insertion de la vitre (5) des deux côtés, atteint au maximum le bord supérieur de la zone (3.2),
(3) application de la bande adhésive (6) sur ledit au moins un rail de levage (1) de telle manière qu'elle
- recouvre partiellement la surface de la tige (3), où la perforation (2) ou l'évidement (7) reste libre, et
- recouvre la zone (3.2) entourant des deux côtés le bord de la vitre (5) et les extrémités ouvertes de la zone (3.2) l'une en face de l'autre de telle manière, que la bande adhésive (6) est déformée dans la direction (R1) par le bord de la vitre (5) à insérer lorsque les deux zones l'une en face de l'autre (6.1) de la bande adhésive (6) sont insérées,
(4) insertion du bord de la vitre (5) à l'intérieur de la zone (3.2) entourant des deux côtés, où les deux zones de la bande adhésive (6) l'une en face de l'autre sont déformés (6.1) dans la direction (R1),
et
(5) Durcissement de la colle (4).

12. Procédé pour éviter des masses adhésives (4.1) pressées lors de la fabrication de dispositifs (1, 5) à partir d'au moins un rail de levage (1) et d'une vitre (5) selon le procédé 11, **caractérisé par** les étapes de procédé suivantes:
(1) Fourniture d'au moins un rail de levage (1), qui présente
- une coupe verticale en forme de fourche,
- une surface de tige (3) avec une perforation (2) ou un évidement (7) sur le bord extérieur (3.4),
- une zone de bifurcation (3.1) où la surface de la tige (3) se prolonge dans la zone (3.2), et
- une zone (3.2) qui entoure le bord d'une vitre des deux côtés dans le dispositif fini (1, 5),
(2) introduction d'une quantité d'un adhésif (4) à l'intérieur de la zone (3.2) dans la zone de bifurcation (3.1) qui, après l'insertion de la vitre (5) des deux côtés, atteint au maximum le bord supérieur de la zone (3.2),
(3) application de la bande adhésive (6) sur ledit au moins un rail de levage (1) de telle manière qu'elle
- recouvre partiellement la surface de la tige (3), où la perforation (2) ou l'évidement (7) reste libre, et
(4) insertion du bord de la vitre (5) à l'intérieur de la zone (3.2) entourant des deux côtés, où les deux zones de la bande adhésive (6) l'une en face de l'autre sont déformés (6.1) dans la direction (R1),
et
(5) Retrait de la bande adhésive (6) en enlevant l'excédent de colle qui s'est dégagé latéralement de la zone (3.2) entourant les deux côtés, et
(6) Durcissement de la colle (4) restante.

13. Utilisation du dispositif (1, 5) selon l'une des revendications 1 à 10 ou du dispositif (1, 5) fabriqué à l'aide du procédé selon la revendication (11) ou selon la revendication (12) comme pièce unique mobile fonctionnelle et/ou décorative et comme élément pour l'installation dans les meubles, les appareils, les bâtiments et les moyens de transport.

14. Utilisation selon la revendication 13, **caractérisée en ce que** les moyens de transport sont les avions, les navires, les trains et les véhicules automobiles.

15. Utilisation selon la revendication 14, **caractérisée en ce que** les dispositifs (1, 5) sont utilisés comme vitres latérales transparentes mobiles et toits vitrés de véhicules automobiles.
